# EUROPEAN PATENT SPECIFICATION

(11) **EP 3 118 502 B1**
(45) Date of publication and mention of the grant of the patent: **29.11.2017**
(21) Application number: 16179589.3
(22) Date of filing: 15.07.2016
(51) Int. Cl.: F16K 37/00

(54) **POSITIONER**
POSITIONIERER
POSITIONNEUR

(30) Priority: 15.07.2015 JP 2015141054
(43) Date of publication of application: 18.01.2017
(73) Proprietor: Azbil Corporation, Chiyoda-ku Tokyo 100-6419 (JP)
(72) Inventor: OKUDA, Kouji, Tokyo, Tokyo 100-6419 (JP)
(74) Representative: Lavoix

(56) References cited:
- JP-A- 2003 139 561
- JP-A- 2013 104 454
- JP-A- 2013 130 236

## Description

### [Technical Field]

The present invention relates to a positioner that controls a valve opening of a regulating valve.

### [Background Art]

In chemical plants and the like, positioners have been provided with respect to regulating valves that are used for the process control of a flow rate, and valve openings of the regulating valves are controlled by the positioners. The positioner calculates a deviation between a set value (set opening) of the valve opening of the regulating valve which is transmitted from a high-order apparatus and a measured value (actual opening) of the valve opening of the regulating valve, and supplies a control signal generated on the basis of the deviation to a setting/operating device for operating the opening and closing of the regulating valve, to thereby control the valve opening of the regulating valve (see JP 2013-104454 A, JP 2013-130236 A and JP 2003-139561 A).

In general, a positioner is used in a manner that a displacement amount detector, such as an angle sensor or a magnetic sensor, a circuit board, and the like are accommodated in a housing formed of a metal and are fixed to a yoke of a regulating valve through a bracket or the like. The displacement amount detector detects an actual opening of the regulating valve as the amount of displacement of a valve stem of the regulating valve. An electronic circuit, performing signal processing on the basis of an output signal which is output from the displacement amount detector, or the like, is formed on the circuit board.

In the positioner, the displacement amount detector such as an angle sensor is disposed at a side closer to the regulating valve within the housing in order to connect with the regulating valve, while the circuit board is often disposed away from the regulating valve within the housing. For this reason, the displacement amount detector and the circuit board are connected to each other by a harness which is a bundle of a plurality of lead wires within the housing, thereby securing the degree of freedom of the arrangement thereof.

Incidentally, a housing of a positioner is generally connected to a ground wire for safety. In addition to the positioner, a regulating valve and other power sources are often connected to the ground wire. For this reason, there is the possibility that noise generated due to a change in an electric current, generated by the operation of the regulating valve, a power source, or the like, or physical vibration is applied to the housing of the positioner through an ground wire.

As described above, the displacement amount detector, the circuit board, the harness, and the like are accommodated in the housing of the positioner. In general, each of the lead wires constituting the harness has a structure in which a core wire serving as a signal line is covered with an insulating member, and thus the harness and the housing can be insulated from each other within the housing of the positioner in terms of direct current.

However, when the positioner itself vibrates due to the operation of the regulating valve, the power source, or the like which is disposed in the vicinity of the positioner, the harness coming into contact with or approaching the housing leads to a concern that noise from an ground wire may be applied to the core wire of the harness through the housing due to capacitive coupling between the harness and the housing.

On the other hand, the positioner adopts a circuit configuration in which predetermined signal processing is performed after a pair of detection signals that are output from the displacement amount detector such as an angle sensor are input to a differential circuit formed on the circuit board through the harness. Accordingly, even when noise is applied to the pair of detection signals of the displacement amount detector from the housing of the positioner through the harness, the noise can be appropriately removed by the differential circuit in a case where the noise is common mode noise.

### [Summary of the Invention]

### [Problem that the Invention is to Solve]

However, in the housing of the positioner, when distances of the respective lead wires, propagating the pair of detection signals, with respect to the housing are different from each other, noises having different magnitudes are applied to the respective lead wires from the housing. The noises are normal mode noises, and thus it is not possible to appropriately remove the noises by using only the differential circuit.

In particular, since vibration generated from a pipe due to the flow of a fluid or vibration generated due to the operation of a pump, a stirrer, or the like is large under an environment in which a positioner is disposed, there is a strong possibility of a large normal mode noise being generated due to the transmission of such a large vibration to the positioner.

When such a large normal mode noise is generated, an error is generated in a detection result of an actual opening of the regulating valve which is obtained by the displacement amount detector such as an angle sensor, which results in a concern that the control stability of the regulating valve may be impaired.

With respect to such a problem, a noise filter (for example, a filter circuit or the like) has been recently separately provided in a signal transmission path of a positioner so as to satisfy noise resistance required by the standards. However, it is not easy to design an optimal noise filter in consideration of all environments allowing a positioner to be used, which results in increases in a development period and a development cost of the positioner.

The invention is made in view of such a problem, and an object thereof is to provide a positioner capable of stably controlling a regulating valve even under a large vibration environment.

### [Means for solving the problem]

According to the invention, a positioner includes a displacement amount detector that detects an amount of displacement of a valve stem of a regulating valve and outputs a pair of detection signals, an interconnection board that includes two insulating layers, and an interconnection layer which is disposed between two insulating layers and has a pair of signal interconnections, having the pair of detection signals supplied thereto, formed therein, a circuit board on which an electronic circuit generating a control signal for controlling a valve opening of the regulating valve, on the basis of the pair of detection signals that are input through the pair of signal interconnections, is formed, and a housing that accommodates at least the interconnection board and the circuit board. The interconnection board is bonded to the housing by a conductive adhesive member in at least a portion of a surface of any one of the insulating layers. The adhesive member has a measured value of hardness, which is obtained by a type D durometer after hardening, being in a range of equal to or greater than D20 and equal to or less than D90.

In the positioner, the adhesive member may have a measured value of hardness, which is obtained by a type D durometer after hardening, being in a range within ±10% of D70.

In the positioner, the interconnection board may be a flexible board.

In the positioner, the displacement amount detector may be an angle sensor including a plurality of magnetic resistive elements that constitute a bridge circuit, and the pair of signal interconnections may be respectively connected to a corresponding pair of output terminals of the bridge circuit.

Meanwhile, in the above description, reference numerals and signs in the drawings which correspond to the components of the invention are described with parentheses, as an example.

### [Advantage of the Invention]

As described above, according to the invention, it is possible to provide a positioner capable of more stably controlling a regulating valve even under a large noise environment.

### [Brief Description of the Drawings]

[Fig. 1] Fig. 1 is a diagram showing a configuration of a valve controlling system including a positioner according to a first embodiment.
[Fig. 2] Fig. 2 is a diagram showing an example of connection between an angle sensor and a circuit board in the positioner according to the first embodiment.
[Fig. 3] Fig. 3 is a schematic diagram showing a connection structure between the circuit board and the angle sensor within a housing of the positioner.
[Fig. 4A] Fig. 4A is a schematic diagram showing a planar structure of an interconnection board that connects the circuit board and the angle sensor to each other in the positioner according to the first embodiment.
[Fig. 4B] Fig. 4B is a schematic diagram showing a cross-sectional structure of the interconnection board that connects the circuit board and the angle sensor to each other in the positioner according to the first embodiment.
[Fig. 5] Fig. 5 is a schematic diagram showing a cross-sectional structure of another interconnection board that connects the circuit board and the angle sensor to each other in the positioner according to the first embodiment.

### [Mode for carrying out the Invention]

Hereinafter, embodiments of the invention will be described with reference to the accompanying drawings.

### «First Embodiment»

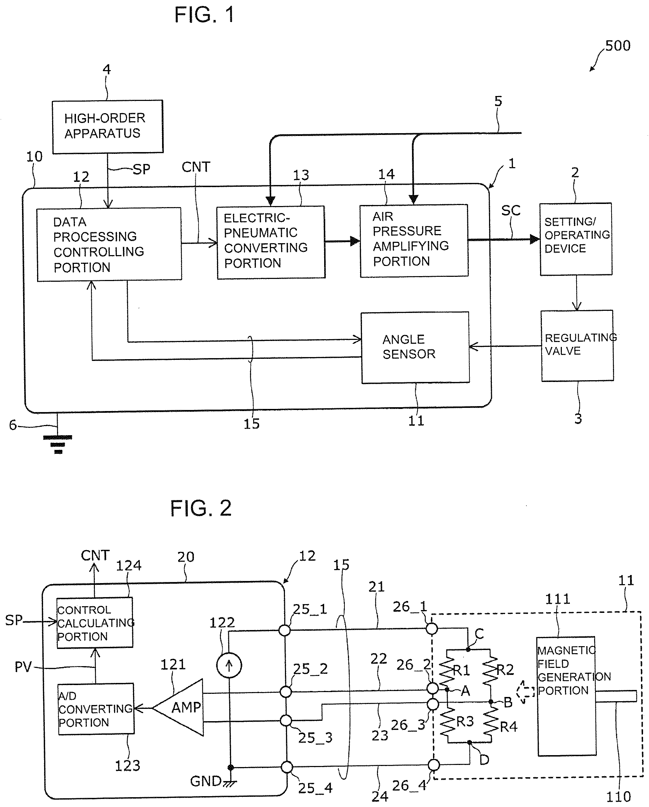

Fig. 1 is a diagram showing a configuration of a valve controlling system including a positioner according to a first embodiment.

A valve controlling system 500 shown in Fig. 1 includes a regulating valve 3, a setting/operating device 2, a high-order apparatus 4, and a positioner 1.

The regulating valve 3 is an apparatus that controls the flow of a fluid from one flow channel to the other flow channel, and is, for example, an air pressure type regulating valve. The setting/operating device 2, which is, for example, an air type valve actuator, operates a valve stem of the regulating valve 3 in accordance with an air pressure operation signal SC supplied from the positioner 1 to be described later, to thereby control opening and closing operations of the regulating valve 3. The high-order apparatus 4 is an apparatus on a high-order side which instructs the positioner 1 to open and close the regulating valve 3, and provides a set value SP of a valve opening of the regulating valve 3 to the positioner 1.

The positioner 1 is an apparatus that controls the opening and closing of the regulating valve 3. Specifically, the positioner 1 calculates a deviation between the set value SP of the valve opening of the regulating valve 3 which is provided by the high-order apparatus 4 and an actual measurement value PV of the valve opening of the regulating valve 3, generates an air pressure operation signal SC in accordance with the deviation, and provides the generated signal to the setting/operating device 2, to thereby control the valve opening of the regulating valve 3.

More specifically, as shown in Fig. 1, the positioner 1 includes an angle sensor 11, a data processing controlling portion 12, an electric-pneumatic converting portion 13, and a air pressure amplifying portion 14. The angle sensor 11, the data processing controlling portion 12, the electric-pneumatic converting portion 13, and the air pressure amplifying portion 14 are accommodated in a housing 10. The housing 10 is fixed to a yoke of the regulating valve 3 through a bracket or the like. In addition, the housing 10 is formed of a metal material and is electrically connected to an ground wire 6.

The angle sensor 11 is a displacement amount detector that detects a valve opening of the regulating valve 3 as the amount of displacement of the valve stem of the regulating valve 3 and outputs a pair of detection signals.

The data processing controlling portion 12 is an electronic circuit that generates a control signal for controlling a valve opening of the regulating valve 3 on the basis of the pair of detection signals that are output from the angle sensor 11. Specifically, the data processing controlling portion 12 calculates an actual measurement value PV of the valve opening of the regulating valve 3 on the basis of the pair of detection signals that are output from the angle sensor 11, and calculates a deviation between a set value SP of the valve opening of the regulating valve 3 which is provided by the high-order apparatus 4 and the actual measurement value PV of the valve opening of the regulating valve 3, to thereby generate an electrical signal CNT in accordance with the deviation.

The electric-pneumatic converting portion 13 is a functional portion that converts the electrical signal CNT generated by the data processing controlling portion 12 into an air pressure signal and outputs the converted signal. Specifically, for example, the electric-pneumatic converting portion converts air supply pressure of air 5 supplied from a pressure reducing valve (not shown) into pressure according to an electrical signal CNT, and outputs the converted pressure as an air pressure signal.

The air pressure amplifying portion 14 is a functional portion that amplifies pressure of the air pressure signal which is output from the electric-pneumatic converting portion 13 and outputs the amplified pressure. Specifically, for example, the air supply pressure of the air 5 which is supplied from the pressure reducing valve (not shown) is reduced in accordance with the pressure of the air pressure signal CNT which is output from the electric-pneumatic converting portion 13, and outputs the reduced pressure as an air pressure operation signal SC.

Here, a connection relationship between the angle sensor 11 and the data processing controlling portion 12 will be described in detail.

Fig. 2 is a diagram showing an example of connection between the angle sensor 11 and the circuit board 20 in the positioner 1 according to the first embodiment.

First, the angle sensor 11 will be described.

The angle sensor 11 includes a rotation shaft 110, a magnetic field generation portion 111, resistors R1 to R4, and external terminals 26_1 to 26_4. The rotation shaft 110 is a shaft that rotates in accordance with linear reciprocation of the valve stem through a feedback lever (not shown) which is connected to the valve stem of the regulating valve 3. The magnetic field generation portion 111 changes a magnetic field in accordance with a change in a rotation angle of the rotation shaft 110.

The resistors R1 to R4 are magnetic resistive elements of which the resistance values change depending on the magnetic flux density of a magnetic field generated by the magnetic field generation portion 111, and constitute a bridge circuit. Specifically, one end of the resistor R1 and one end of the resistor R2 are connected to each other, the other end of the resistor R1 and one end of the resistor R3 are connected to each other, the other end of the resistor R2 and one end of the resistor R4 are connected to each other, and the other end of the resistor R3 and the other end of the resistor R4 are connected to each other.

In addition, a node C connecting the resistor R1 and the resistor R2 to each other is connected to the terminal 26_1, a node D connecting the resistor R3 and the resistor R4 to each other is connected to the terminal 26_4, a node A connecting the resistor R1 and the resistor R3 to each other is connected to the terminal 26_2, and a node B connecting the resistor R2 and the resistor R4 to each other is connected to the terminal 26_3.

Here, the terminals 26_1 and 26_4 are external terminals for power supply which supplies power to nodes C and D in the bridge circuit, and receives a constant current supplied from the data processing controlling portion 12 as power. In addition, the terminals 26_2 and 26_3 are external terminals for signal output which outputs voltages of the nodes A and B in the bridge circuit as a pair of detection signals indicating the amount of displacement of the valve stem of the regulating valve 3.

Next, the data processing controlling portion 12 will be described.

As shown in Fig. 2, the data processing controlling portion 12 includes a differential amplifier circuit 121, a constant current source 122, an A/D converting portion 123, a control calculating portion 124, and a plurality of external terminals. Meanwhile, in Fig. 2, terminals 25_1 to 25_4 for connection to the angle sensor 11 among the external terminals included in the data processing controlling portion 12 are shown.

Here, the differential amplifier circuit 121, the constant current source 122, the A/D converting portion 123, the control calculating portion 124, and the terminals 25_1 to 25_4 that constitute the data processing controlling portion 12 are formed on the circuit board 20 constituted by a printed circuit board or the like, through soldering or the like.

The terminals 25_1 and 25_4 are external terminals for power supply which supply power (for example, a constant current) to the angle sensor 11. The terminal 25_1 is connected to the terminal 26_1 of the angle sensor 11 by the power supply line 21, and the terminal 25_4 is connected to the terminal 26_4 of the angle sensor 11 by the power supply line 24.

The terminals 25_2 and 25_3 are external terminals for signal input which inputs a signal received from the angle sensor 11. The terminal 25_2 is connected to the terminal 26_2 of the angle sensor 11 by the signal line 22, and the terminal 25_3 is connected to the terminal 26_3 of the angle sensor 11 by the signal line 23.

Meanwhile, in the following description, the power supply lines 21 and 24 and the signal lines 22 and 23 may be collectively referred to as "interconnections 21 to 24".

The differential amplifier circuit (AMP) 121 is a circuit that inputs voltages of the pair of nodes A and B in the bridge circuit of the angle sensor 11 through the terminals 25_2 and 25_3, amplifies a differential voltage between the input two voltages, and outputs the amplified differential voltage. Meanwhile, a signal may be directly input to the differential amplifier circuit 121 from the terminals 25_2 and 25_3 as shown in Fig. 2, or may be input through a buffer circuit or the like.

The constant current source 122 is a functional portion that supplies a constant electric current to the pair of nodes C and D in the bridge circuit of the angle sensor 11 through the terminals 25_1 and 25_4. Specifically, the constant electric current which is output from the constant current source 122 flows into the node C of the bridge circuit through the terminal 25_1, the power supply line 21, and the terminal 26_1, and the electric current which is output from the node D flows into a ground GND of the data processing controlling portion 12 through the terminal 26_4, the power supply line 24, and the terminal 25_4.

The A/D converting portion 123 converts an output signal (analog signal) of the differential amplifier circuit 121 into a digital signal, and outputs a result of the conversion as an actual measurement value PV of a valve opening of the regulating valve 3.

The control calculating portion 124 is a functional portion that calculates a deviation between the actual measurement value PV of the regulating valve 3 which is output from the A/D converting portion 123 and a set value SP of a valve opening which is provided by the high-order apparatus 4, and generates an electrical signal CNT in accordance with the deviation. The control calculating portion 124 is constituted by a program processing device such as a CPU.

Here, the control calculating portion 124, the A/D converting circuit 123, the constant current source 122, and the differential amplifier circuit 121 which constitute the data processing controlling portion 12 may be realized by one semiconductor device such as a microcontroller or may be realized by discrete semiconductor devices, and a hardware configuration is not particularly limited. For example, the control calculating portion 124 may be realized by one microcontroller, and the A/D converting portion 123, the differential amplifier circuit 121, and the constant current source 122 may be realized by one IC chip.

Next, a connection structure between the circuit board 20 having the data processing controlling portion 12 formed therein and the angle sensor 11 will be described.

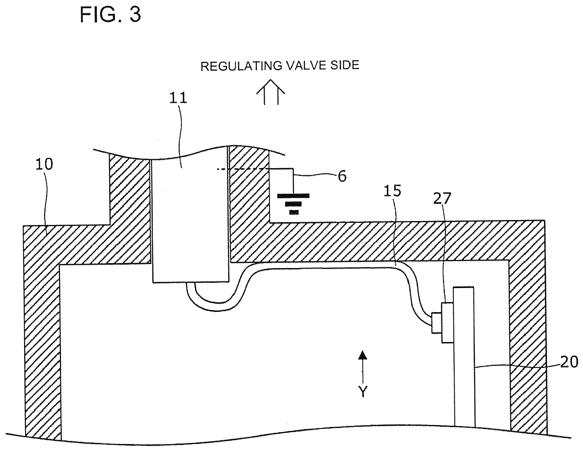

Fig. 3 is a schematic diagram showing a connection structure between the circuit board 20 and the angle sensor 11 within the housing of the positioner. In the drawing, a cross-sectional structure within the housing 10 is schematically shown.

As shown in Fig. 3, the angle sensor 11 is required to be connected to the valve stem of the regulating valve 3 through a feedback lever as described above, and thus is disposed on a side close to the regulating valve 3 within the housing. On the other hand, the data processing controlling portion 12 is disposed further away from the regulating valve 3 than the angle sensor 11.

As described above, the angle sensor 11 and the data processing controlling portion 12 are required to be electrically connected to each other through the power supply lines 21 and 24 and the signal lines 22 and 23. Consequently, as shown in Fig. 3, in the positioner 1 according to the first embodiment, the power supply lines 21 and 24 and the signal lines 22 and 23 are formed on an interconnection board 15, and the angle sensor 11 and the data processing controlling portion 12 are connected to each other through the interconnection board 15.

Here, the interconnection board 15 is, for example, a flexible board (flexible printed circuit: FPC) including one interconnection layer, and is manufactured by a known technique for manufacturing a flexible board.

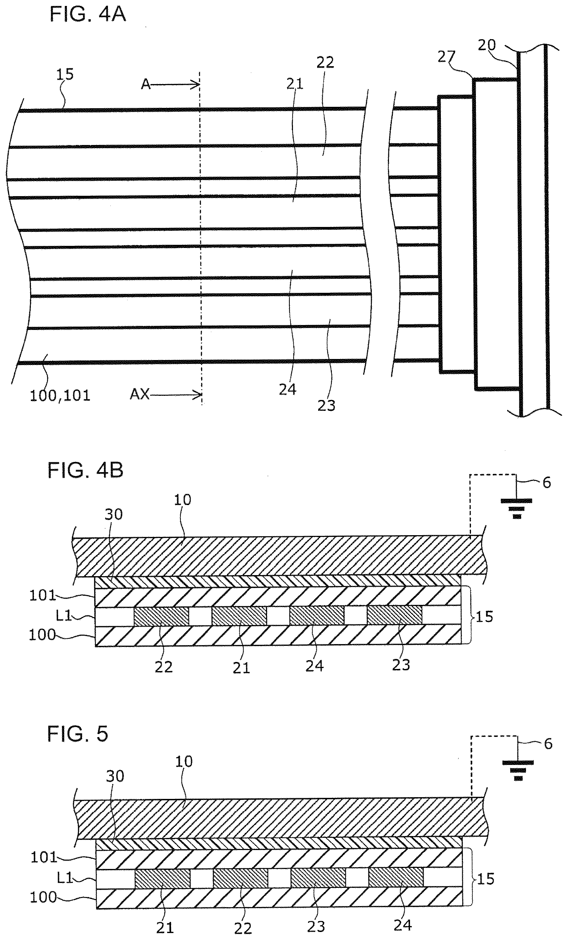

Fig. 4A is a schematic diagram showing a planar structure of the interconnection board 15, and Fig. 4B is a schematic diagram showing a cross-sectional structure of the interconnection board 15. Fig. 4A shows a planar structure of the interconnection board 15 when seen from a Y direction of Fig. 3, and Fig. 4B shows a cross-sectional structure of the interconnection board 15 taken along line A-AX of Fig. 4A.

As shown in Fig. 4B, the interconnection board 15 is configured such that one interconnection layer L1 is formed on a cover film 100 formed of an insulating material, as a base (base material), and a cover film 101 formed of an insulating material is formed on the interconnection layer L1.

Here, the cover films 100 and 101 are formed of a resin material such as polyimide. Meanwhile, an adhesive layer for bonding upper and lower layers to each other may be provided between layers (for example, between the interconnection layer L1 and the cover films 100 and 101) when necessary.

In the interconnection layer L1, an interconnection is formed of a metal material such as copper (Cu). Specifically, as shown in Figs. 4A and 4B, the power supply lines 21 and 24 and the signal interconnections 22 and 23 are formed in the interconnection layer L1.

As shown in Fig. 3, one ends of the power supply lines 21 and 24 and the signal interconnections 22 and 23 are connected to a connector 27, and are connected to the circuit board 20 (terminals 26_1 to 26_4) through the connector 27. In addition, the other ends of the power supply lines 21 and 24 and the signal interconnections 22 and 23 are connected to the angle sensor 11 (terminals 25_1 to 25_4).

Meanwhile, one ends and the other ends of the power supply lines 21 and 24 and the signal interconnections 22 and 23 that are formed in the interconnection layer L1 of the interconnection board 15 may be connected to the angle sensor 11 and the circuit board 20 through connectors or may be directly connected to the angle sensor 11 and the circuit board 20 through soldering, and a method of connecting the interconnection board 15 to the angle sensor 11 and the circuit board 20 is not particularly limited.

As shown in Figs. 4A and 4B, the interconnection board 15 is bonded to the housing 10 of the positioner 1 by a conductive adhesive member 30 in at least a portion of a surface of any one of the cover films 101 and 102. Meanwhile, Fig. 4B shows a case where the surface of the cover film 101 is bonded to the surface of the housing 10 through the adhesive member 30, but the surface of the cover film 100 may be bonded to the surface of the housing 10 through the adhesive member 30.

As described above, a positioner as a field apparatus is often used under a large vibration environment, and thus has to have a structure capable of withstanding vibration. For this reason, it is preferable that the adhesive member 30 has hardness capable of withstanding vibration applied to the positioner 1 after the interconnection board 15 is bonded to the housing 10. That is, it is preferable that the adhesive member 30 retains elasticity making it difficult for the adhesive member 30 itself to be damaged or broken due to vibration, while maintaining a constant distance between the interconnection board 15 and the surface of the housing 10.

Specifically, it is preferable that an adhesive material having a measured value of hardness, which is obtained by a type D durometer after hardening, being in a range of equal to or greater than D20 and equal to or less than D90 is used as the adhesive member 30. More preferably, an adhesive material having a measured value of hardness, which is obtained by the durometer of the type D after the hardening, being D70 is used as the adhesive member 30. Here, the measured value "D70" of the hardness after the hardening may include some errors. For example, the measured value of the hardness after the hardening may be in a range within ±10% of D70. As the adhesive member 30 having the above-described characteristics, "Duralco 120", formed of a conductive epoxy-based resin, which is manufactured by TAIYO WIRE CLOTH CO., LTD. can be exemplified.

The interconnection board 15 and the housing 10 are bonded to each other by the adhesive member 30, and thus distances of the power supply lines 21 and 24 and the signal interconnections 22 and 23 with respect to the housing 10 become equal to each other in the bonding portion. That is, as shown in Fig. 4B, the respective interconnections 21 to 24 are disposed at equal distances with respect to the surface of the housing 10 electrically connected to the ground wire 6 in the bonding portion. In addition, since the adhesive member 30 has conductivity, the adhesive member 30 is disposed at the same electropotential as the surface of the housing 10, that is, the ground wire 6. Thereby, capacitance values of parasitic capacitances formed between the surface of the housing 10 and the respective interconnections 21 to 24 using the cover film 101 as a dielectric become equal to each other.

That is, even when the positioner 1 vibrates, a state where distances of the respective interconnections 21 to 24 with respect to the housing 10 are equal to each other is maintained, and thus noises applied to the respective interconnections 21 to 24 from the housing 10 through the parasitic capacitances become common mode noises of which the phases and the signal levels are equal to each other.

Here, although a positional relationship between the power supply lines 21 and 24 and the signal interconnections 22 and 23 in a planar direction of the interconnection board 15 is not particularly limited, it is preferable that the signal interconnection 22 and the signal interconnection 23 are disposed so as to be symmetrical to the power supply lines 21 and 24 as much as possible. Thereby, it is possible to further reduce a difference between the phase and the signal level of noise which is applied to each of the signal interconnections 22 and 23. For example, as shown in Figs. 4A and 4B, the power supply lines 21 and 24 may be disposed between the signal interconnection 22 and the signal line 23. In addition, as shown in Fig. 5, the signal interconnections 22 and 23 may be disposed between the power supply line 21 and the power supply line 24.

As described above, according to the positioner 1 of the first embodiment, an interconnection connecting the angle sensor 11 and the circuit board 20 to each other is formed on the interconnection board 15, the pair of signal lines 22 and 23 propagating the pair of detection signals that are output from the angle sensor 11 are formed in the interconnection layer L1 of the interconnection board 15, and the surface of the cover film 101 of the interconnection board 15 and the surface of the housing 10 are bonded to each other by the conductive adhesive member 30, thereby allowing distances of the pair of signal lines 22 and 23 with respect to the housing 10 to be equal to each other. Accordingly, when the housing 10 is connected to the ground wire 6, noise applied to each of the signal lines 22 and 23 through the housing 10 from the ground wire 6 becomes common mode noise instead of normal mode noise, and thus it is possible to appropriately remove the noise by the differential amplifier circuit 121 located at the rear stage.

In addition, according to the positioner 1 of the first embodiment, an adhesive material having a measured value of hardness, which is obtained by a type D durometer after hardening, being in a range of equal to or greater than D20 and equal to or less than D90 is used as the adhesive member 30, and thus it is possible to realize elasticity making it difficult for the adhesive member 30 itself to be damaged or broken due to vibration, while maintaining a constant distance between the interconnection board 15 and the surface of the housing 10. Thereby, even when the positioner 1 is used under a large vibration environment, the interconnection board 15 is not likely to be peeled off from the housing 10, thereby maintaining a state where distances of the pair of signal lines 22 and 23 with respect to the housing 10 are equal to each other.

Therefore, according to the positioner 1 of the first embodiment, noise overlapping a detection result of a displacement amount detector such as the angle sensor 11 can be appropriately removed through the housing 10 even under a large vibration environment, and thus it is possible to more stably realize the control of the regulating valve 3.

In addition, according to the positioner 1 of the first embodiment, normal mode noise from the housing 10 can be reduced without separately providing a noise filter, and thus it is possible to achieve reductions in a development period and a development cost of a positioner. In addition, even when a noise filter is provided in order to further improve noise resistance, it is easier to design the noise filter than in a case where any assumable noise is removed by only a noise filter as in a positioner of the related art.

In addition, the interconnection board 15 is constituted by a multi-layered flexible board, and thus the degree of freedom of the arrangement of a displacement amount detector, such as the angle sensor 11, and the circuit board 20 within the housing 10 is increased, thereby making it easier to design a positioner.

As described above, the invention implemented by the inventors has been described in detail on the basis of the embodiments. However, the invention is not limited thereto, and it is needless to say that the invention can be modified in various ways without departing from the scope thereof.

For example, in the first embodiment, a case where the interconnection board 15 is a multi-layered flexible board has been described, but the invention is not limited thereto. For example, the interconnection board 15 may be constituted by a rigid flexible board in which a rigid board and a flexible board are combined with each other, or may be constituted by, for example, a single-layered rigid board formed to have an L shape.

In addition, in the first embodiment, the angle sensor has been described as a displacement amount detector that detects a valve opening as the amount of displacement of the valve stem of the regulating valve 3, but is not limited thereto insofar as the angle sensor is a sensor that detects the amount of displacement of a valve stem and outputs a pair of detection signals (differential signals). For example, a position sensor that detects the amount of displacement of a valve stem and outputs a pair of detection signals can also be used instead of the angle sensor 11. Even in this case, it is possible to reduce normal mode noise overlapping the pair of detection signals that are output from the position sensor.

In addition, in the first embodiment, the positioner having a structure in which the angle sensor 11 is accommodated in the housing 10 has been described, but is not limited thereto. The positioner may be configured such that the angle sensor 11 and the housing 10 are separated from each other. In this case, in an interconnection that connects the circuit board 20 and the angle sensor 11 to each other, a portion accommodated in the housing 10 may be formed by the interconnection board 15 described above.

### [Description of Reference Numerals and Signs]

500: valve controlling system
1: positioner
2: setting/operating device
3: regulating valve
4: HIGH-ORDER apparatus
5: air
6: ground wire
10: housing
11: angle sensor
12: data processing controlling portion
13: electric-pneumatic converting portion
14: air pressure amplifying portion
15: interconnection board
20: circuit board
21, 24: power supply line
22, 23: signal line
25_1, 25_2, 25_3, 25_4, 26_1, 26_2, 26_3, 26_4: terminal
27: connector
30: adhesive member
R1, R2, R3, R4: resistor
A, B, C, D: terminal of bridge circuit
L1: interconnection layer
100, 101: cover film
121: differential amplifier circuit
122: constant current source
123: A/D converting portion
124: control calculating portion.

## Claims

1. A positioner (1) comprising:
a displacement amount detector (11) configured to detect an amount of displacement of a valve stem of a regulating valve (3) and configured to output a pair of detection signals;
an interconnection board (15) that includes two insulating layers (100, 101), and an interconnection layer (L1) which is disposed between two insulating layers and comprising a pair of signal interconnections (22, 23), having the pair of detection signals supplied thereto, formed therein;
a circuit board (20) on which an electronic circuit (12) generating a control signal (CNT) for controlling a valve opening of the regulating valve, on the basis of the pair of detection signals that are input through the pair of signal interconnections, is formed; and
a housing (10) that accommodates at least the interconnection board and the circuit board,
wherein the interconnection board is bonded to the housing by a conductive adhesive member (30) in at least a portion of a surface of any one of the insulating layers, and
wherein the adhesive member (30) has a measured value of hardness, which is obtained by a type D durometer after hardening, being in a range of equal to or greater than D20 and equal to or less than D90.

2. The positioner according to claim 1,
wherein the adhesive member (30) has a measured value of hardness, which is obtained by a type D durometer after hardening, being in a range within ±10% of D70.

3. The positioner according to claim 1 or 2,
wherein the interconnection board (15) is a multi-layered flexible board.

4. The positioner according to any one of claims 1 to 3,
wherein the displacement amount detector is an angle sensor including a plurality of magnetic resistive elements (R1, R2, R3, R4) that constitute a bridge circuit, and
wherein the pair of signal interconnections are respectively connected to a corresponding pair of output terminals (A, B) of the bridge circuit.

## Patentansprüche

1. Positionierer (1), Folgendes umfassend:
einen Verlagerungsumfangdetektor (11), der dafür konfiguriert ist, einen Umfang einer Verlagerung eines Ventilschafts eines Regelventils (3) zu erkennen, und dafür, ein Paar von Erkennungssignalen auszugeben,
eine Verbindungsplatte (15), die zwei Isolierschichten (100, 101) und eine Verbindungsschicht (L1) umfasst, welche zwischen zwei Isolierschichten angeordnet ist, und ein darin gebildetes Paar von Signalverbindungen (22, 23) mit dem ihnen zugeführten Paar von Erkennungssignalen umfasst,
eine Platine (20), auf der eine elektronische Schaltung (12) gebildet ist, die auf der Grundlage des Paares von Erkennungssignalen, das durch das Paar von Signalverbindungen eingegeben wird, ein Steuersignal (CNT) zum Steuern einer Ventilöffnung des Regelventils erzeugt, und
ein Gehäuse (10), in dem zumindest die Verbindungsplatte und die Platine untergebracht sind,
wobei die Verbindungsplatte durch ein leitendes haftendes Element (30) auf mindestens einem Abschnitt einer Oberfläche einer der Isolierschichten an das Gehäuse gebunden ist und
wobei das haftende Element (30) einen gemessenen Härtegrad aufweist, der nach dem Härten durch einen Härtemesser des Typs D gewonnen wird und in einem Bereich liegt, der gleich oder größer als D20 und gleich oder kleiner als D90 ist.

2. Positionierer nach Anspruch 1, wobei das haftende Element (30) einen Härtegrad aufweist, der nach dem Härten durch einen Härtemesser des Typs D gewonnen wird und in einem Bereich von ±10 % von D70 liegt.

3. Positionierer nach Anspruch 1 oder 2, wobei die Verbindungsplatte (15) eine mehrschichtige flexible Platte ist.

4. Positionierer nach einem der Ansprüche 1 bis 3, wobei der Verlagerungsumfangdetektor ein Winkelsensor ist, der mehrere magnetische Widerstandselemente (R1, R2, R3, R4) beinhaltet, die eine Brückenschaltung bilden, und
wobei das Paar von Signalverbindungen mit einem entsprechenden Paar von Ausgangsanschlüssen (A, B) der Brückenschaltung verbunden ist.

## Revendications

1. Positionneur (1) comprenant :
un détecteur de quantité de déplacement (11) configuré pour détecter une quantité de déplacement d'une tige de vanne d'une vanne de régulation (3) et configuré pour délivrer une paire de signaux de détection ;
une carte d'interconnexion (15) qui comprend deux couches d'isolement (100, 101), et une couche d'interconnexion (L1) qui est disposée entre les deux couches d'isolement et comprenant une paire d'interconnexions de signaux (22, 23), auxquelles la paire de signaux de détection sont fournis, formées dans celle-ci ;
une carte de circuit (20) sur laquelle un circuit électronique (12) générant un signal de commande (CNT) pour commander une ouverture de vanne de la vanne de régulation, sur la base de la paire de signaux de détection qui sont appliqués par l'intermédiaire de la paire d'interconnexions de signaux, est formé ; et
un logement (10) qui loge au moins la carte d'interconnexion et la carte de circuit,
dans lequel la carte d'interconnexion est liée au logement par un élément adhésif conducteur (30) dans au moins une partie d'une surface de l'une quelconque des couches d'isolement, et
dans lequel l'élément adhésif (30) a une valeur de dureté mesurée, qui est obtenue par un duromètre de type D après durcissement, qui est dans une plage égale ou supérieure à D20 et égale ou inférieure à D90.

2. Positionneur selon la revendication 1,
dans lequel l'élément adhésif (30) a une valeur de dureté mesurée, qui est obtenue par un duromètre de type D après durcissement, qui est dans une plage dans les limites de ± 10 % de D70.

3. Positionneur selon la revendication 1 ou 2,
dans lequel la carte d'interconnexion (15) est une carte souple multicouche.

4. Positionneur selon l'une quelconque des revendications 1 à 3,
dans lequel le détecteur de quantité de déplacement est un capteur d'angle comprenant une pluralité d'éléments magnétiques résistifs (R1, R2, R3, R4) qui constituent un circuit de pont, et
dans lequel la paire d'interconnexions de signaux sont respectivement connectées à une paire correspondante de bornes de sortie (A, B) du circuit de pont.
